(19) Europäisches Patentamt
European Patent Office
Office européen des brevets

(11) **EP 4 787 446 A1**

(12) **EUROPEAN PATENT APPLICATION**
published in accordance with Art. 153(4) EPC

(43) Date of publication:
05.08.2026 Bulletin 2026/32

(21) Application number: 24872538.4

(22) Date of filing: 27.09.2024

(51) International Patent Classification (IPC):
H01M 4/13 $^{(2010.01)}$    H01B 1/06 $^{(2006.01)}$
H01M 4/02 $^{(2006.01)}$    H01M 4/62 $^{(2006.01)}$
H01M 10/052 $^{(2010.01)}$    H01M 10/0562 $^{(2010.01)}$

(52) Cooperative Patent Classification (CPC):
H01B 1/06; H01M 4/02; H01M 4/13; H01M 4/62;
H01M 10/052; H01M 10/0562; Y02E 60/10

(86) International application number:
PCT/JP2024/034736

(87) International publication number:
WO 2025/070757 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 JP 2023164198

(71) Applicant: Niterra Co., Ltd.
Nagoya-shi, Aichi 461-0005 (JP)

(72) Inventors:
• KAJIURA Ryunosuke
Nagoya-shi, Aichi 461-0005 (JP)

• SUZUKI Akihiro
Nagoya-shi, Aichi 461-0005 (JP)
• SHISHIHARA Daisuke
Nagoya-shi, Aichi 461-0005 (JP)
• SATO Motohiko
Nagoya-shi, Aichi 461-0005 (JP)
• MUKAI Takashi
Izumi-shi, Osaka 594-1118 (JP)
• YAMASHITA Naoto
Izumi-shi, Osaka 594-1118 (JP)

(74) Representative: Zimmermann & Partner
Patentanwälte mbB
P.O. Box 330 920
80069 München (DE)

(54) **SHEET AND POWER STORAGE DEVICE**

(57) To provide a sheet (10) and a power storage device (20) that can exhibit enhanced cycle characteristics. The sheet has an active material layer (11) containing an active material (14) and an oxide layer (12) in contact with the active material layer. The active material layer contains an inorganic framework (15) which is disposed at least on a surface of the active material layer in contact with the oxide layer and between particles of the active material. The oxide layer contains particles (16) of an oxide-based solid electrolyte, a binder for binding the particles, and an electrolytic solution. The power storage device has a positive electrode layer (21), a negative electrode layer, a separator (12) for separating the positive electrode layer from the negative electrode layer, and the negative electrode layer includes a current-collector layer (13) and an active material layer. The active material layer is a part of the sheet.

FIG. 1

**Description**

TECHNICAL FIELD

The present invention relates to a sheet having an active material layer, and to a power storage device.

BACKGROUND ART

A power storage device containing an active material in a negative electrode thereof which material intrinsically undergoes a change in volume during charge and discharge may exhibit a steep drop in percent capacity maintenance during repeated charge/discharge cycles. Such a phenomenon is evoked by provision of voids between the active material particles or a change in morphological conditions of the active material. Patent Literature 1 discloses a related technique for preventing a steep drop in percent capacity maintenance of a battery having a layer containing an active material and a solid electrolyte, the technique including repeatedly conducting a charge/discharge treatment, while a pressure of 150 kgf/cm$^2$ or higher is applied to the battery in a stacking direction.

CITATION LIST

PATENT LITERATURE

Patent Literature 1: JP2014-35987A

SUMMARY OF INVENTION

TECHNICAL PROBLEM

According to the related technique, percent capacity maintenance problematically varies by a subtle variation in pressure during the charge/discharge treatment.
The present invention has been conceived to solve the above problem. Thus, an object of the invention is to provide a sheet and a power storage device that can exhibit enhanced cycle characteristics, even no charge/discharge treatment with application of pressure is conducted.

SOLUTION TO PROBLEM

In a first aspect to attain the object of the invention, there is provided a sheet having an active material layer containing an active material, which sheet further includes an oxide layer in contact with the active material layer. The active material layer contains an inorganic framework which is disposed at least on a surface of the active material layer in contact with the oxide layer and between particles of the active material. The oxide layer contains particles of an oxide-based solid electrolyte, a binder for binding the particles, and an electrolytic solution.
In a second aspect, the particles of the first aspect have a median diameter 0.04 times or greater and 0.6 times or less the median diameter of the active material.
In a third aspect, the oxide layer of the first or second aspect has a Young's modulus of 0.05 to 6.50 MPa.
In a fourth aspect, the particles of any of the first to third aspects have a circularity lower than 0.8, preferably lower than 0.72. The circularity of the particles is preferably 0.60 or greater and lower than 0.80.
In a fifth aspect, in any of the first to fourth aspects, a ratio of the volume of the binder to the total volume of the particles, the binder, and the electrolytic solution is lower than 50%, preferably 5% or higher.
In a sixth aspect, the particles of any of the first to fifth aspects have a garnet-type crystal structure including Li, La, and Zr.
In a seventh aspect, the particles of the sixth aspect further contain Mg and Sr.
In an eighth aspect, there is provided a power storage device having a positive electrode layer, a negative electrode layer, and a separator which separates the positive electrode layer from the negative electrode layer. The negative electrode layer includes a current-collector layer and an active material layer, and the active material layer is a part of a sheet as recited in any of the first to seventh aspects.
In a ninth aspect, the separator of the eighth aspect includes the oxide layer belonging to the sheet.
In a tenth aspect, the power storage device of the eighth aspect further includes a protective layer in contact with the active material layer, and the protective layer includes the oxide layer belonging to the sheet.

ADVANTAGEOUS EFFECTS OF INVENTION

According to the sheet of the present invention, the inorganic framework can reduce the change in volume of the active material possibly occurring during charge and discharge. The particles contained in the oxide layer reduces peeling of the oxide layer with the inorganic framework in a concerted manner. As a result, cycle characteristics of the power storage device including the sheet can be enhanced.

BRIEF DESCRIPTION OF DRAWINGS

FIG. 1 shows a cross-section of a sheet according to one embodiment.

FIG. 2 shows a schematic view of garnet-type crystal structure.

FIG. 3 shows a cross-section of a power storage device of the first embodiment.

FIG. 4 shows a cross-section of a power storage device of the second embodiment.

FIG. 5 shows a cross-section of a power storage device of the third embodiment.

DESCRIPTION OF EMBODIMENTS

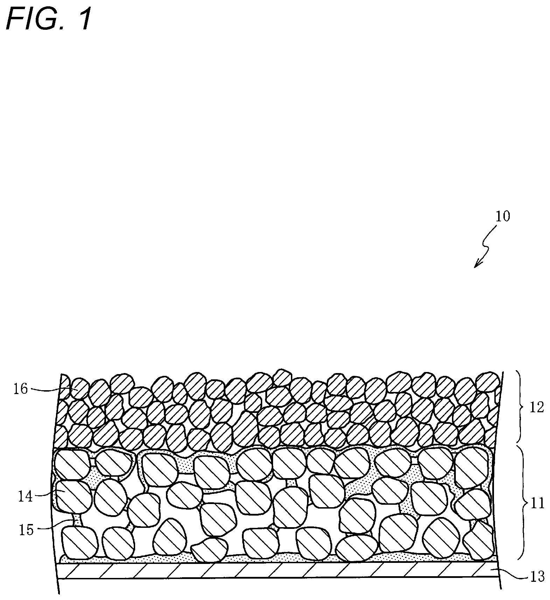

Hereinafter, a preferred embodiment of the present invention will be described with reference to attached drawings. FIG. 1 is a schematic cross-section of a sheet 10 of one embodiment. The sheet 10 includes an active material layer 11 and an oxide layer 12 which is in contact with the surface of the active material layer 11. In the present embodiment, the sheet 10 includes a current-collector layer 13 which is disposed on the back surface of the active material layer 11.
No particular limitation is imposed on the material of the current-collector layer 13, so long as the material has electron conductivity and allows electrical passage through the active material layer 11. Examples of the material which can be used as the current-collector layer 13 include conductive substances such as C, Ti, Cr, Ni, Cu, Fe, Mo, Ru, Rh, Ta, W, Os, Ir, Pt, Al, and Au, and an alloy containing two or more species of the conductive substances (e.g., a stainless steel). When Fe is used as the current-collector layer 13, the current-collector layer 13 is preferably coated with Ni, Cu, or the like, for preventing oxidation. No particular limitation is also imposed on the shape of the current-collector layer 13, and examples include wire, rod, plate, foil, and a porous body.
The active material layer 11 contains an active material 14 and an inorganic framework 15 which is disposed at least on the surface of the active material layer 11 and between the particles of the active materials 14. In the present embodiment, the inorganic framework 15 is disposed both on the surface of the active material layer 11 (i.e., at the interface between the active material layer 11 and the oxide layer 12) and particles of the active material 14.
No particular limitation is imposed on the active material 14, so long as the material can occlude and release alkali metal ions ($Li^+$, $Na^+$, $K^+$, etc.) in a reversible manner. The mechanism of occlusion and release of ions may be based on dissolution and deposition of substance, insertion and dissociation of ions to and from the intercrystal layer, etc. The active material 14 may be formed of one or more elements selected from the group consisting of Li, Na, K, C, Mg, Al, Si, P, Ca, Sc, Ti, V, Cr, Mn, Fe, Co, Ni, Cu, Zn, Ga, Ge, Y, Zr, Nb, Mo, Pd, Ag, Cd, In, Sn, Sb, W, Pb, and Bi; or an alloy, a complex body, an oxide, a chalcogen compound, or a halogen compound of any of these elements.
From the viewpoint of controlling the electrode potential to fall within a range of 0 V to 1 V (vs. $Li^+/Li$), the active material 14 is preferably at least one or more elements selected from the group consisting Li, Na, K, C, Mg, Al, Si, Ti, Zn, Ge, Fe, Mn, Ag, Cu, In, Sn, and Pb, an isotope, an alloy, or an oxide of any of these elements. From the viewpoint of enhancing energy density, the active material 14 preferably contains an element such as Al, Si, Zn, Ge, Ag, and Sn.
The alloy serving as the active material 14 is preferably Si-Al, Al-Zn, Si-Mg, Si-La, Al-Ge, Si-Ge, Si-Ag, Si-Sn, Si-Ti, Si-Y, Si-Cr, Si-Ni, Si-Zr, Si-V, Si-Nb, Si-Mo, Zn-Sn, Ge-Ag, Ge-Sn, Ge-Sb, Ag-Sn, Ag-Ge, Sn-Sb, etc. The alloy may be all proportional solid solution (isomorphous) alloy, eutectic alloy, hypoeutectic alloy, hypereutectic alloy, or peritectic alloy. The oxide is preferably $Fe_2O_3$, $CuO$, $MnO_2$, $NiO$, $Li_4Ti_5O_{12}$, $H_2Ti_{12}O_{25}$, $Na_2Ti_3O_7$, etc. The active material 14 may be coated with a material or ceramic material having excellent electron conductivity. The active material 14 may be formed of two or more materials. No particular limitation is imposed on the morphology of the active material 14, and the shape may be spherical, oval, facet-like, belt-like, fiber-like, flake-like, torus, or hollow.
The inorganic framework 15 serves as a core of the active material layer 11 and is formed of an inorganic compound. No particular limitation is imposed on the inorganic compound forming the inorganic framework 15, so long as the inorganic compound has resistance to the active material 14 or the electrolytic solution. Examples of the inorganic compound include a silicate salt having a siloxane bond, and a phosphate salt having an aluminophosphate bond.

The silicate salt is a compound having a molecular skeleton mainly including Si and O. Examples of the silicate salt include an alkali metal silicate salt, a guanidine compound silicate salt, and an ammonium compound silicate salt. The silicate salt includes polysilicate salts such as an orthosilicate salt ($A_4SiO_4$), a metasilicate salt ($A_2SiO_3$), a pyrosilicate salt ($A_6Si_2O_7$), a disilicate salt ($A_2Si_2O_5$), and tetrasilicate salt ($A_2Si_4O_9$), and $A_2Si_2O_5$, $A_2Si_3O_7$, $A_2Si_4O_9$, and the like, and may be a hydrate of the salts (wherein A represents an alkali metal element, a guanidine compound, or an ammonium compound). A part of the Si site(s) of siloxane bond may be substituted by a transition metal element such as Al, Zr, Ti, Mg, Mo, Sr, Ca, Zn, Ba, B, W, Ta, Ce, Hf, and Y.

The silicate salt is represented by a general formula $A_2O \cdot nSiO_2$ and has a crystalline or amorphous structure. A in the general formula is any one or more of Li, Na, K, a triethanolammonium group, a tetramethanolammonium group, a tetraethanolammonium group, and a guanidine group, and n is 0.5 or greater and 5.0 or less.

Preferably, A in the general formula is Li or Na, and n is 1.6 or greater and 3.9 or less, more preferably 2.0 or greater and 3.5 or less. From the viewpoints of mechanical strength of the framework, binding performance, and wear resistance, A is preferably Na. When A is Li, the yielded inorganic framework 15 exhibits high ion conductivity, resulting in excellent input/output characteristics of a power storage device (details described in another section). Even in the case where A is Na, when n exceeds 5.0, the binding performance of the active material 14 tends to decrease. When n is less than 0.5, viscosity increases. In such a case, difficulty is generally encountered in forming the inorganic framework 15 between particles of the active material 14.

The silicate salt is preferably amorphous. Since such an amorphous silicate salt has no orientation and is isotropic, cracking along a specific direction is inhibited. As a result, the effect of improving the service life of the active material layer 11 increases. In addition, resistance to hydrofluoric acid increases, whereby collapsing of the active material layer 11 possibly caused by hydrofluoric acid is inhibited.

Examples of the phosphate salt of the inorganic framework 15 include an aluminum phosphate salt, a magnesium phosphate salt, and a calcium phosphate salt. Examples of the aluminum phosphate salt include an aluminum phosphate salt ($Al(H_2PO_4)_3$), an aluminum hydrogen phosphate salt ($Al_2(H_2PO_4)_3$), and aluminum metaphosphate ($Al(PO_3)_3$). Examples of the magnesium phosphate salt include a monobasic magnesium phosphate salt ($Mg(H_2PO_4)_3$), a magnesium hydrogen phosphate salt ($MgHPO_4$), and magnesium metaphosphate ($Mg(PO_3)_2$). Examples of the calcium phosphate salt include a monobasic calcium phosphate salt ($Ca(H_2PO_4)_3$), a calcium hydrogen phosphate salt ($CaHPO_4$), a tricalcium phosphate salt ($Ca_3(H_2PO_4)_2$), and calcium metaphosphate ($Ca(PO_3)_2$). These phosphate salts may be in the form of hydrate.

When a phosphate salt is heated, water is eliminated from hydroxyl groups, and a covalent bond is formed between P and O. That is, dehydration condensation reaction occurs. In the dehydration condensation reaction, at most 6 sites per one molecule having a transition metal center provide reaction sites, and a transition metal phosphate having a three-dimensional polymer structure is yielded. In other words, the phosphate salt is a compound having a molecular main skeleton including P, O, and a transition metal (M).

The phosphate salt has a crystalline or amorphous structure represented by a general formula $M \cdot nHxPO_4$. In the general formula, M is at least one species of Al, Ca, and Mg, and a part of M may be substituted by a transition metal such as Cu, Fe, Ba, Ti, Mn, Mo, Mg, Si, Sr, Ca, Zn, Ba, B, W, Ta, Ce, Hf, or Y. In the general formula, x is 0 or greater and 2 or less, and n is 0.5 or greater and 5 or less. M is preferably Al, from the viewpoints of mechanical strength of the inorganic framework 15, binding performance, and wear resistance. From the viewpoint of binding performance of the active material 14, x is preferably 1 to 2, more preferably 2. From the viewpoints of mechanical strength of the inorganic framework 15, binding performance, and wear resistance, n is preferably 0.5 to 5.0, more preferably 2.5-3.5. Similar to the case of the silicate salt, the phosphate salt is preferably amorphous.

The sheet 10 may be produced through the following procedure. Specifically, the active material layer 11 is yielded by mixing the active material 14 with a solution of a binder dissolved therein, to thereby prepare a slurry; forming a film of the slurry on the current-collector layer 13, and conducting drying. In one mode of the method of disposing the inorganic framework 15 on the active material layer 11, a framework-forming agent is applied onto the surface of the active material layer 11, and then the active material layer 11 is heated at, for example, at 110 to 160°C, to thereby cure the framework-forming agent. The framework-forming agent is an aqueous solution of a silicate salt dissolved in water of a basic condition or an aqueous solution of a phosphate salt dissolved in water of an acidic condition. The aqueous solution may contain a surfactant.

Application of the framework-forming agent may be performed through a method in which the active material layer 11 is immersed in a bath storing the framework-forming agent; adding the framework-forming agent dropwise to a surface of the active material layer 11, or spraying the spray-form framework-forming agent to the active material layer 11; or other coating methods such as screen printing, curtain coating, spin coating, gravure coating, and die coating. The framework-forming agent which has been applied onto the surface of the active material layer 11 permeates the active material layer 11 from the surface to the inside, whereby the agent enters the spaces between particles of the active material 14. As a result, an electrode sheet in which the inorganic framework 15 has been disposed on the surface of the active material layer 11 and between particles of the active material 14 can be formed.

In an alternative method of disposing the inorganic framework 15 into the active material layer 11, a framework-forming agent is employed as a binder in granulation of the active material 14. Examples of the method of granulating the active material include granulation with a fluidized bed, granulation under agitation, granulation under rolling, spray drying, granulation under extrusion, granulation under rolling, and granulation under coating. Through any of these methods, aggregated particles of the active material 14 containing the framework-forming agent are formed, and the aggregated particles are dried, to thereby prepare a granulated product in which particles of the active material 14 are bound by means of the inorganic framework 15. Through binding the granulated product by means of a binder on the current-collector layer 13, the active material layer 11 is completed. As a result, there can be yielded an electrode sheet including the current-collector layer 13 and the active material layer 11 in which the inorganic framework 15 is provided between particles of the active material 14. The framework-forming agent content of the granulated product is preferably 0.2 mass% or higher and 30 mass% or lower.

Separate from the electrode sheet, an electrolytic solution in which an electrolyte has been dissolved in a solvent is mixed with particles 16. A solution in which a binder is dissolved is mixed with the above mixture, to thereby prepare a slurry. The slurry is formed into a tape, which is then dried, to thereby yield a green sheet (i.e., an oxide sheet) for forming the oxide layer 12. The electrode sheet and the oxide sheet were cut into pieces having specific dimensions, and the electrode sheet is stacked together with an oxide sheet, followed by pressing, to thereby unify the layers. Thus, a sheet 10 is yielded. Alternatively, the slurry is applied onto the electrode sheet, to thereby form the oxide layer 12 on the active material layer 11.

In the case where the framework-forming agent contains a silicate salt, the framework-forming agent preferably contains further inorganic particles having resistance to alkali. Also, when the framework-forming agent contains a phosphate salt, the framework-forming agent preferably further contains inorganic particles having resistance to acid. In the case where the framework-forming agent contains inorganic particles, when the framework-forming agent is applied onto the active material layer 11, the inorganic particles enter the active material layer 11, by virtue of the inorganic particles present on the active material layer 11. By forming aggregated particles of the active material 14 containing the framework-forming agent, the inorganic particles are present between particles of the active material 14.

When the inorganic framework 15 contains the inorganic particles, voids are provided between inorganic particles. As a result, during drying of the framework-forming agent, water vapor can be removed through the voids. Thus, swelling (expansion) of the inorganic framework 15, which would otherwise be caused by confining vapor, can be reduced. Also, the voids provided between inorganic particles can reduce defoliation and cracking of the inorganic framework 15, which would otherwise be evoked by a decrease in volume of the salt during drying of the framework-forming agent.

Examples of the alkali-resistant inorganic particles include oxides, hydroxides, nitrides, carbides, carbonate compounds. and sulfate compounds of at least one element selected from the group consisting of Al, Zr, Ti, Si, Mo, Sr, Ba, B, W, Ta, Ce, Hf, and Y. From the viewpoints of resistance to decomposition by oxidation and reduction during charge and discharge of a power storage device and small irreversible capacity, the alkali-resistant inorganic particles preferably contain $Al_2O_3$, $ZrO_2$, $TiO_2$, $SiO_2$, CeO, $Y_2O_3$, AlN, WC, SiC, $B_4C$, BN, TaC, TiC, $TiB_2$, $HfB_2$, $Si_3N_4$, TiN, $Al_2(SO_4)_3$, and $ZrSiO_4$.

The inorganic framework 15 preferably has an inorganic particle content of 20 mass% or higher and 95 mass% or lower, with respect to the total amount of the silicate salt or the phosphate salt and the inorganic particles. Also, the volume-basis median diameter of the inorganic particles, as determined through laser diffraction/scattering particle size distribution analysis, is preferably 0.2 $\mu$m or more and 20 $\mu$m or less. Since the inorganic framework 15 has high mechanical strength and excellent heat resistance, and exhibits excellent binding performance to the active material 14, the inorganic framework 15 can achieve firm fixation of the active material 14 to the active material layer 11.

The active material layer 11 may contain a binder that can bind the active material 14. Examples of the binder include fluororesin, polyolefin, polyvinylpyrrolidone, poly(vinyl alcohol), cellulose ether, polyimide, polyamide, polyamide-imide, rubber-like polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer. These polymers may be used singly or in combination of two or more species.

No particular limitation is imposed on the vinylidene fluoride-based polymer, so long as the polymer include $-CH_2CF_2-$. Examples of the vinylidene fluoride-based polymer include a vinylidene fluoride homoploymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. Polymerization of one or more co-polymerizable monomers with vinylidene fluoride forms a copolymer of interest.

The active material layer 11 may contain a conducting material for imparting electron conductivity to the layer. No particular limitation is imposed on the conducting material, so long as it has electron conductivity. Examples of the conducting material include metals such as Ni, Pt, and Ag; carbon materials such as carbon black, acetylene black, Ketjen black, and carbon fiber; conductive polymer, and conductive glass. These conducting materials may be used singly or in combination of two or more species.

In the active material layer 11, the ratio of the amount of the conducting material with respect to the sum of the amounts of the active material 14, binder, and conducting material is suitably 0 to 20 mass%. When the amount of the conducting material exceeds 20 mass%, generally, the relative amount of the active material 14 decreases, thereby lowering capacity density.

The active material layer 11 may contain particles of an oxide-based solid electrolyte. In the active material layer 11, the ratio of the amount of the solid electrolyte particles with respect to the sum of the amounts of the active material 14, binder, and solid electrolyte particles is suitably 0 to 20 mass%. When the amount the solid electrolyte particles exceeds 20 mass%, generally, the relative amount of the active material 14 decreases, thereby lowering capacity density.

In the active material layer 11, the ratio of the amount of the binder with respect to the sum of the amounts of the active material 14, binder, conducting material, and particles is preferably 0.1 to 60 mass%, more preferably 0.5 to 30 mass%. When the ratio of the binder is less than 0.1 mass%, generally, the mechanical strength of the active material layer 11 decreases, to thereby easily cause a drop of the active material 14. When the ratio of the binder is exceeds 60 mass%, generally, electric resistance increases, and capacity density decreases.

The oxide layer 12 is in contact with the surface of the active material layer 11. The oxide layer 12 contains particles 16 of the oxide-based solid electrolyte, a binder, and an electrolytic solution. Examples of the solid electrolyte include β-alumina, a NASICON-type material, a LISICON-type material, an oxide having a perovskite structure, and an oxide having a garnet-type structure.

The NASICON-type material is represented by a general formula $A_xM_2(TO_4)_3$. Examples of A include Na and Li; examples of M include Zr, Ti, V, Mn, Cr, Fe, Ni, Al, and Ge; and examples of T include P, Si, and As. Examples of the material include $Na_3V_2(PO_4)_3$, $Li_{1+x}Al_xTi_{2-x}(PO_4)_3$, and $Li_{1+x}Ge_xTi_{2-x}(PO_4)_3$. Examples of the LISICON-type material include $Li_{4-2x}Zn_xGeO_4$ ($0 \leq x \leq 1$). Examples of the oxide having a perovskite structure include $Li_xLa_{(1-x)/3}NbO_3$ and $La_{2/3-x}Li_{3x}TiO_3$ ($0 \leq x \leq 1$). The crystal structure of a garnet-type oxide is represented by a general formula $C_3A_2B_3O_{12}$. An oxide having a garnet-type structure is preferred, for its excellent resistance to chemical reduction.

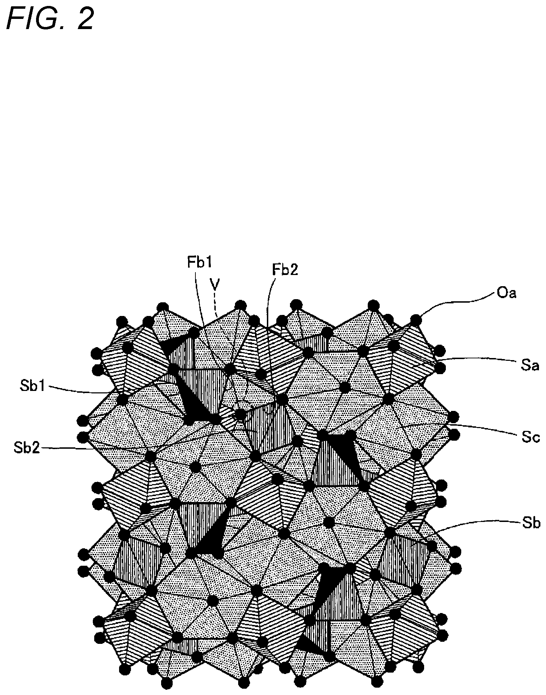

FIG. 2 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The solid electrolyte 19 generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, in which Fb1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The garnet-type crystal structure may be determined through X-ray diffraction. The garnet-type crystal structure exhibits an XRD pattern similar to that of an X-ray diffraction file No. 422259 ($Li_7La_3Zr_2O_{12}$) of CSD (Cambridge Structural Database). As compared with No. 422259, the solid electrolyte may have differences in the type of elements forming oxide, the Li concentration, and the like. Therefore, diffraction angle and intensity ratio may vary. A typical crystal structure in relation to the above is a cubic system (space group: Ia-3d ("-" is an over-line representing rotary inversion), JCPDS:84-1753).

A typical example of the material of the solid electrolyte having a garnet-type crystal structure is $Li_7La_3Zr_2O_{12}$. In the solid electrolyte, a part of the elements forming $Li_7La_3Zr_2O_{12}$ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the solid electrolyte include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$,

Li6.9La3Zr1.675Ta0.289Bi0.036O12, Li6.46Ga0.23La3Zr1.85Y0.15O12, Li6.8La2.95Ca0.05Zr1.75Nb0.25O12, $Li_{7.05}La_{3.00}Zr_{1.95}Gd_{0.05}O_{12}$, and $Li_{6.20}Ga_{0.30}La_{2.95}Rb_{0.05}Zr_2O_{12}$.

Particularly, the solid electrolyte preferably contains at least one of Mg and element A (A represents at least one element selected from the group consisting of Ca, Sr, and Ba), and satisfies all the following conditions (1) to (3) regarding mole proportions of the elements. Alternatively, the solid electrolyte preferably contains both Mg and element A, and satisfies all the following conditions (4) to (6) regarding mole proportions of the elements. From the viewpoint of elevating the ion conductivity of the solid electrolyte, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.6$$

$$(5)\ 0.01 \leq Mg/(La+A) \leq 0.14$$

$$(6)\ 0.04 \leq A/(La+A) \leq 0.17$$

Returning to FIG. 1, the binder is further described. The binder contained in the oxide layer 12 binds together the particles 16 of the solid electrolyte. Examples of the binder include fluororesin, polyolefin, polyvinylpyrrolidone, poly(vinyl alcohol), cellulose ether, polyimide, polyamide, polyamide-imide, rubber-like polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer. These polymers may be used singly or in combination of two or more species.

No particular limitation is imposed on the vinylidene fluoride-based polymer, so long as the polymer include $-CH_2CF_2-$. Examples of the vinylidene fluoride-based polymer include a vinylidene fluoride homopolymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. Polymerization of one or more copolymerizable monomers with vinylidene fluoride forms a copolymer of interest.

In the oxide layer 12, the binder and the electrolytic solution may be present in a separated state. Alternatively, the binder and the electrolytic solution may be present in a mixed state, to form a gel. Yet alternatively, the oxide layer 12 may contain a solvent that can dissolve the binder. The binder preferably exhibits a potential window wider than that of the electrolytic solution.

The electrolytic solution is a solution in which an electrolyte is dissolved in a solvent. No particular limitation is imposed on the solvent, so long as it can dissolve the electrolyte. Examples of the solvent include a carbonate ester, an aliphatic carboxylate ester, a phosphate ester, a γ-lactone, an ether, a nitrile, sulfolane, dimethylsulfoxide, a fluorous solvent, and an ionic liquid. A mixture of these solvents may also be used.

Examples of the carbonate ester include cyclic carbonate ester such as propylene carbonate, ethylene carbonate, butylene carbonate, vinylene carbonate, vinylethylene carbonate, and fluoroethylene carbonate; and chain carbonate ester such as dimethyl carbonate, diethyl carbonate, and ethyl methyl carbonate.

Examples of the aliphatic carboxylate ester include methyl formate, methyl acetate, and ethyl propionate. Examples of the phosphate ester include trimethyl phosphate. Examples of the γ-lactone include γ-butyrolactone. Examples of the ether include chain ethers such as 1,3-dioxolane and 1,2-dialkoxyethane; and cyclic ethers such as tetrahydrofuran and 2-methyltetrahydrofuran. Examples of the nitrile include acetonitrile and propionitrile. The fluorous solvent is a hydrocarbon compound in which a hydrogen atom of hydrocarbon is substituted by a fluorine atom, or its derivative.

The ionic liquid is a compound composed of a cation and an anion and assumes liquid at ambient temperature and pressure. When the solvent of an electrolytic solution is an ionic liquid, flame resistance of the electrolytic solution can be enhanced. Suitably, the ionic liquid has a cation which is one or more species selected from the group consisting of ammonium, imidazolium, pyrrolidinium, and piperidinium.

No particular limitation is imposed on the anion moiety of the ionic liquid. Examples of the anion moiety include inorganic anions such as $BF_4^-$ and $N(SO_2F)_2^-$; and organic anions such as $B(C_6H_5)_4^-$, $CH_3SO_3^-$, $CF_3SO_3^-$, $N(SO_2CF_3)_2^-$, and $N(SO_2C_4F_9)_2^-$. In some cases, $N(SO_2F)_2^-$ may be abbreviated as referred to as [FSI]$^-$) (i.e., bis(fluorosulfonyl)imide anion) and $N(SO_2CF_3)_2^-$ may be abbreviated as [TFSI]$^-$ (i.e., bis(trifluoromethanesulfonyl)imide anion).

Examples of the ionic liquid include N,N-diethyl-N-methyl-N-(2-methoxyethyl)ammonium bis(fluorosulfonyl) imide (DEME-FSI), N,N-diethyl-N-methyl-N-(2-methoxyethyl)ammonium bis(trifluoromethanesulfonyl)imide (DEME-TFSI), 1-ethyl-3-methylimidazolium bis(fluorosulfonyl)imide (EMI-FSI), 1-ethyl-3-methylimidazolium bis(trifluoromethanesulfonyl)imide (EMI-TFSI), N-butyl-N-methylpiperidinium bis(fluorosulfonyl)imide, N-methyl-N-propylpiperidinium bis(trifluoromethanesulfonyl)imide, N-methyl-N-propylpyrrolidinium bis(fluorosulfonyl)imide (P13-FSI), and N-methyl-N-propylpyrrolidinium bis(trifluoromethanesulfonyl)imide (P13-TFSI). A mixture thereof may also be employed.

The ionic liquid may be a solvated ionic liquid. Examples of the solvated ionic liquid include a solution prepared by dissolving an electrolyte in a sulfone-type solvent (e.g., sulfolane or a sulfolane derivative) or a glyme-type solvent (e.g., tetraglyme).

The electrolyte is a compound which is employed for establishing transfer of cations. The cation of the electrolyte is an alkali metal ion. Examples of the anion of the electrolyte include halide ions (e.g., I$^-$, Cl$^-$, and Br$^-$), SCN$^-$, $BF_4^-$, $BF_3$($CF_3$)$^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3$, $C(SO_2CF_3)_3^-$, $CF_3COO^-$, $CF_3SO_2O^-$, $C_6F_5SO_2O^-$, $B(O_2C_2O_2)_2^-$, and RCOO$^-$ (R represents a C1 to C4 alkyl group, a phenyl group, or a naphthyl group). The electrolyte may also be a mixture of these salts.

The electrolyte salt concentration of the electrolytic solution is 0.2 mol/dm$^3$ or higher, preferably 0.5 mol/dm$^3$ or higher. As the salt concentration increases, the number of solvent molecules coordinating to carrier ions increases, and the amount of non-coordinated solvent decreases. As a result, the interfacial resistance among the particles 16 can be reduced. The salt concentration of the electrolytic solution is preferably 4.0 mol/dm$^3$ or lower. When the salt concentration of the electrolytic solution exceeds 4.0 mol/dm$^3$, a tendency that ion conductivity decreases by an increase in viscosity of the electrolytic solution is considerable.

The oxide layer 12 has a ratio of the volume of the particles 16 to the total volume of the particles 16 and the electrolytic solution of 52% or higher and lower than 100%, preferably 61% or higher and lower than 100%. Since the combination of the particles 16 with the electrolytic solution can reduce the interfacial resistance among the particles 16, the ion transport number of the oxide layer 12 can be enhanced, as compared with that of a conventional electrolytic solution. As a result, operational stability of the power storage device (described below) employing the oxide layer 12 increases. In the oxide layer 12, when the ratio of the volume of the binder to the total volume of the particles 16, the binder, and the electrolytic solution is less than 50%, the tensile modulus of the oxide layer 12 can be maintained to an appropriate extent, which is preferred.

Each of the particle 16 content, the binder content, and the electrolytic solution content (vol%) is determined through analysis of 10 or more vision fields (×5,000) selected at random from cross-sections of the oxide layer 12 by means of a scanning electron microscope (SEM) equipped with an energy-dispersive X-ray spectrometer (EDS). In the analysis, the area attributed to the particles 16, that attributed to the binder, and that attributed to the electrolytic solution are determined by identifying the element distribution or performing image analysis of the contrast in a backscattered electron image. The ratio of the area of the particles 16 to the sum of the area of the particles 16 and that of the electrolytic solution is considered as the corresponding volume ratio, to thereby determine the particle 16 content (vol%). Also, the ratio of the area of the binder to the sum of the area of the particles 16, that of the binder, and that of the electrolytic solution is considered as the corresponding volume ratio, to thereby determine the binder content (vol%).

The cross-section of the oxide layer 12 provided in the analysis is a polished surface, a surface obtained through irradiation with a focused ion beam (FIB), or a surface obtained through ion milling. The polished surface is obtained by, for example, freezing the oxide layer 12, or embedding the oxide layer 12 in a 4-functional epoxy resin or the like to solidify, followed by polishing.

The particles 16 of the oxide-type solid electrolyte contained in the oxide layer 12 are harder than other solid electrolyte particles such as particles of a sulfide-type solid electrolyte. Therefore, the particles 16 are more easily trapped by the surface of the active material layer 11 at the interface between the oxide layer 12 and the active material layer 11 including the inorganic framework 15. Since the particles 16 in the oxide layer 12 are bound to one another by the mediation of the binder, the oxide layer 12 contracts to follow the change in volume of the active material 14 in the active material layer 11. As a result, peeling of the interface between the active material layer 11 and the oxide layer 12 is impeded.

In order to reduce peeling of the oxide layer 12 possibly caused by friction between the oxide layer 12 and the active material layer 11, the particles 16 contained in the oxide layer 12 are preferably have low circularity (i.e., having corners). The circularity of the particles 16 is determined from an SEM image of the particles 16 emerging in a cross-section of the oxide layer 12. The SEM image is an image obtained by enlarging a rectangular area (12 $\mu$m × 9 $\mu$m) in the cross-section of the oxide layer 12. After taking the SEM image, image analysis is conducted by image analysis known software (e.g., WinROOF (registered trademark), product of Mitani Corporation).

In the image analysis, the dimensions of the SEM image are calibrated by means of the attached scale bar. Then, a binarization processing of the SEM image is conducted so as to extract edges observed in the image. In the binarization processing, the luminance (liminocity) of each pixel of the SEM image is binarized by employing a specific threshold value (e.g., 0 to 25). By binarizing the pixels, a medium gradation is cancelled out, to thereby obtain a binarized image in which edges (grain boundary) of the particles 16 are emphasized.

Based on the thus-obtained binarized image, the area S of the particles 16, and the full contour length L of the particles 16 in the area S (i.e., total contour length) are determined. through a known image analysis technique. The circularity of the particles 16 can be calculated by the numerical expression $4\pi S/L^2$. In order to enhance trapping efficiency of the particles 16 by the surface of the active material layer 11, the average circularity of 20 particles 16 selected at random is preferably less than 0.8, more preferably less than 0.72. Further more preferably, the circularity of the particles 16 is 0.1 or higher and 0.5 or lower.

In order to enhance trapping of the particles 16 by the surface of the active material layer 11, regarding the circle-equivalent diameter of the particles 16 contained in the oxide layer 12, the median diameter thereof preferably falls within a range of 0.8 to 10 $\mu$m, more preferably 1 to 6 $\mu$m. The circle-equivalent diameter of the particles 16 is defined as a diameter of a circle having an area corresponding to the area S of the particles 16 emerging in the cross-section.

The median diameter, as the circle-equivalent diameter, of the particles 16 is preferably 0.04 times or greater and 0.60 times or less the median diameter, as the circle-equivalent diameter, of the active material 14. The circle-equivalent diameter of the active material 14 refers to a diameter of a circle having an area corresponding to the area S of the active material 14 emerging in a cross-section.

For determining the median diameter of the particles 16 and the active material 14, a cross-sectional SEM image is analyzed, and a circle-equivalent diameter is calculated from the area S of each particle 16, whereby the volume-basis particle size distribution is determined. Similarly, a circle-equivalent diameter is calculated from the area S of each particle of the active material 1416, whereby the volume-basis particle size distribution is determined. The median diameter is defined as a circle-equivalent diameter at which the cumulative value of the frequency in the particle size distribution is 50%. The area of the SEM image for determining the particle size distribution is adjusted to 400 $\mu$m$^2$ or more of the area in the oxide layer 12 or the active material layer 11, for securing the accuracy.

Since the oxide layer 12 contracts to follow the change in volume of the active material 14 in the active material layer 11, the Young's modulus (tensile elastic modulus) of the oxide layer 12 is preferably 0.05 to 6.50 MPa. The Young's modulus is measured in accordance with JIS K7161-1:2014.

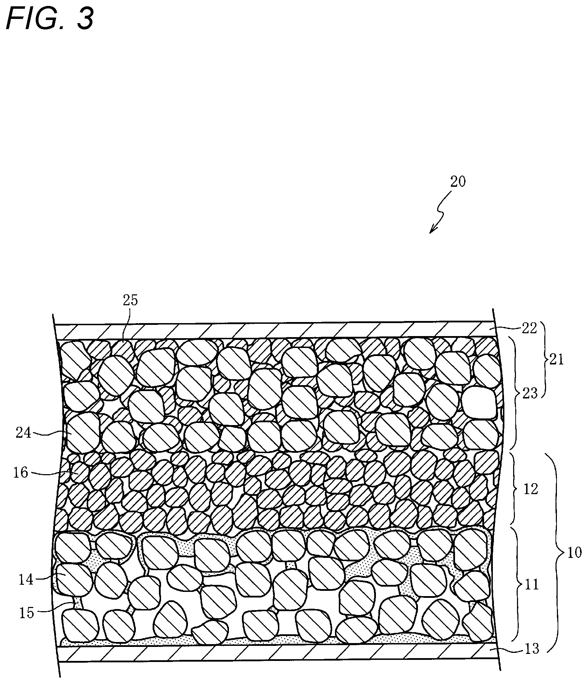

With reference to FIG. 3, a power storage device 20 employing a sheet 10 will be described. FIG. 3 is a cross-section of the power storage device 20 of a first embodiment. The power storage device 20 includes a positive electrode layer 21 and the sheet 10, and the positive electrode layer 21 includes a current-collector layer 22 and an active material layer 23 in that order.

No particular limitation is imposed on the material of the current-collector layer 22, so long as the material has electron conductivity and allows electrical passage through the active material layer 23. Examples of the material which can be used as the current-collector layer 22 include conductive substances such as C, Ti, Cr, Ni, Cu, Fe, Mo, Ru, Rh, Ta, W, Os, Ir, Pt, Al, and Au, and an alloy (e.g., stainless steel) containing two or more members of the conductive substances. When Fe is used as the current-collector layer 22, the current-collector layer 22 is preferably coated with Ni or Cu, for preventing oxidation. No particular limitation is also imposed on the shape of the current-collector layer 22, and examples include wire, rod, plate, foil, and a porous body.

The active material layer 23 contains an active material 24 and particles 25. For lowering the resistance of the active material layer 23, the active material layer 23 may contain a conducting aid. Examples of the conducting aid include carbon black, acetylene black, Ketjen black, carbon fiber, Ni, Pt, and Ag.

Examples of the active material 24 include a metal oxide in which the metal includes a transition metal, a sulfur-containing active material, and an organic active material. Examples of the metal oxide in which the metal includes a transition metal include an oxide containing Li and at least one element selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_4$, $LiNi_{1/3}Mn_{1/3}Co_{1/3}O_2$, and $LiFePO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoquinodimethane; and phenazine oxide.

In order to suppress reaction between the active material 24 and the particles 25, a coating layer may be provided on the active material 24. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

The active material layer 23 may contain a binder for binding the active material 24. Examples of the binder include a fluororesin, polyolefin, polyvinylpyrrolidone, poly(vinyl alcohol), cellulose ether, polyimide, polyamide, polyamide-imide, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer. These polymers may be used singly or in combination of two or more species.

In the power storage device 20, the active material layer 11 and the current-collector layer 13 in the sheet 10 form the negative electrode layer, while the oxide layer 12 in the sheet 10 forms a separator for isolating the positive electrode layer 21 from the negative electrode layer. Since the oxide layer 12 contains an electrolytic solution, the interfacial resistance of the particles 16 contained in the oxide layer 12 can be reduced.

The power storage device 20 is fabricated through, for example, the following procedure. The active material 24 and the particles 25 are mixed together, and a solution containing a binder dissolved therein is mixed with the above mixture, to thereby prepare a slurry. The slurry is applied onto the current-collector layer 22 and then dried, to thereby yield a green sheet (positive electrode sheet) for providing the positive electrode layer 21.

The sheet 10 and the positive electrode sheet are cut into shapes of interest, respectively. Subsequently, the sheet 10 and the positive electrode sheet are stacked, and the stacked product is pressed to integrate the sheets. To each of the current-collecting layers 13 and 22, a terminal (not illustrated) is connected, and the product is built in a case (not illustrated), and the case is closed. Thus, the power storage device 20 including the positive electrode layer 21, a separator, and the negative electrode layer can be fabricated.

Examples of the form of the power storage device 20 include a stacking type in which positive electrode layers 21 and negative electrode layers are alternatingly stacked by the mediation of separators; and a wound type in which the positive electrode layer 21 and the negative electrode layer are wound with a separator to a spiral shape. Examples of the application of the power storage device 20 include an electrochemical capacitor and a semisolid battery. Regarding the power storage device 20, no treatment is required for enhancing cycle characteristics which treatment includes repeated charge/discharge processes, while a pressure is applied to the power storage device in a stacking direction. Thus, the power storage device can be converted to various types.

In the power storage device 20, the inorganic framework 15 minimizes a change in volume of the active material 14 in the negative electrode layer during a charge/discharge process. Further, combination of the particles 16 contained in the oxide layer 12 with the inorganic framework 15 minimizes peeling of the oxide layer 12 concomitant with a change in volume of the active material 14 in the negative electrode layer during a charge/discharge process. Thus, enhancement in cycle characteristics of the power storage device 20 and stabilization of the device can be achieved.

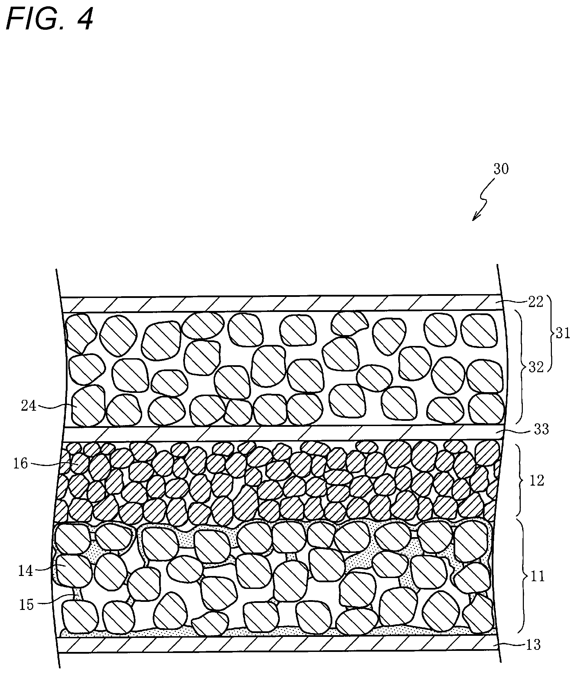

With reference to FIG. 4, a second embodiment will be described. In the first embodiment, a case in which the oxide layer 12 is employed as a separator has been described. In the second embodiment, there will be described a case in which the oxide layer 12 is employed as a protective layer. In the second embodiment, the same members as described in the first embodiment are denoted by the same reference numerals, and further descriptions thereof will be omitted. FIG. 4 is a schematic cross-section of a power storage device 30 of the second embodiment. The power storage device 30 is a liquid-type alkali metal ion battery.

The power storage device 30 includes a positive electrode layer 31, a separator 33, and the sheet 10 in that order. The stacked product is built in a case (not illustrated). The positive electrode layer 31 is formed of a current-collector layer 22 and an active material layer 32 stacked thereon. The active material layer 32 contains an active material 24. In order to lower the resistance of the active material layer 32, the active material layer 32 may contain a conducting aid such as carbon black, acetylene black, Ketjen black, carbon fiber, Ni, Pt, and Ag.

The separator 33 is resistive to the active materials 14 and 24 and the electrolytic solution contained in the positive electrode layer 31 or the sheet 10. Examples of the separator include a porous body which allows passage of alkali metal ions but has no electron conductivity. Examples of the porous body include non-woven fabric or porous film formed of cellulose, polypropylene, polyethylene, etc. Examples of the mode of the separator 33 include a configuration in which a gel-form electrolyte having ion conductivity is placed, and a configuration in which a mixture of a solid electrolyte having ion conductivity and an electrolytic solution is placed. Since the electrolytic solution employed in the second embodiment is the same as described in the first embodiment, overlapping description will be omitted.

The oxide layer 12 (i.e., a protective layer) intervenes between the separator 33 and the active material layer 11. The oxide layer 12 is disposed through sheet stacking, application onto the separator 33, or the like. The oxide layer 12 intervening between the active material layer 11 and the separator 33 suppresses short circuit, which would otherwise be caused by dendritic growth of alkali metal.

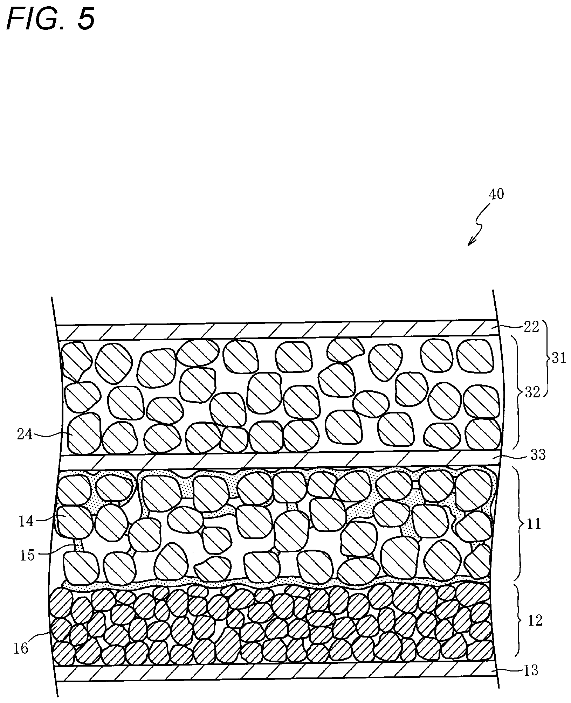

With reference to FIG. 5, a third embodiment will be described. In the second embodiment, a case in which the oxide layer 12 is inserted between the separator 33 and the active material layer 11 to provide a protective layer has been described. In the third embodiment, there will be described a case in which the oxide layer 12 is inserted between the active material layer 11 and the current-collector layer 13 to provide a protective layer. In the third embodiment, the same members as described in the first or second embodiment are denoted by the same reference numerals, and further descriptions thereof will be omitted. FIG. 5 is a schematic cross-section of a power storage device 40 of the third embodiment. The power storage device 40 is a liquid-type alkali metal ion battery.

The power storage device 40 includes the positive electrode layer 31, the separator 33, the active material layer 11, the oxide layer 12, and the current-collector layer 13 in that order. The stacked product is built in a case (not illustrated). The oxide layer 12 (i.e., a protective layer) intervening between the active material layer 11 and the current-collector layer 13 is disposed through sheet stacking, application onto the current-collector layer 13, or the like. The oxide layer 12 intervening between the active material layer 11 and the current-collector layer 13 reduces degradation of the current-collector layer 13.

EXAMPLES

The present invention will next be described in detail by way of examples, which should not be construed as limiting the invention thereto.

(Experiment 1)

(Preparation of solid electrolyte particles)

$Li_2CO_3$, MgO, $La(OH)_3$, $SrCO_3$, and $ZrO_2$ were weighed so as to establish a formula: $Li_{6.95}Mg_{0.15}La_{2.75}Sr_{0.25}Zr_{2.0}O_{12}$. The amount of $Li_2CO_3$ was adjusted to an about 15 mol%-excess (as reduced to elemental Li), in consideration of sublimation of Li during firing. The thus-weighed raw materials, an organic solvent, and zirconia balls were fed to a nyoln-made pot, and the mixture was pulverized and mixed by means of a ball mill for 15 hours. The resultant slurry was removed from the pot and dried. The dry product was calcined on an MgO plate at 900°C for 1 hour and 1,200°C for 10 hours. The powder obtained through calcination was placed on an MgO plate and fired at 1,100°C for 4 hours in an inert gas atmosphere. The powder obtained through firing was wet-pulverized by means of a planetary ball mill under non-air-exposed condition for a predetermined period of time. After drying, various solid electrolyte particles were yielded.

(Preparation of electrolytic solution)

An electrolyte, $LiN(SO_2F)_2$(LiFSI), was dissolved in an ion liquid, N-methyl-N-propylpyrrolidinium bis(fluorosulfonyl)imide (P13FSI), to thereby prepare an electrolytic solution having a salt concentration of 2.1 mol/dm$^3$.

(Formation of oxide layer)

The particles and the electrolytic solution were mixed by means of a mortar so that the ratio (particle : electrolytic solution) was adjusted to 61:39 (vol%). To the mixture, a binder solution prepared by dissolving poly(vinylidene fluoride-hexafluoropropylene) (PVdF-HFP) in a carbonate ester was added in an amount of interest. The resultant mixture was agitated by means of a planetary agitator, to thereby prepare a slurry for forming an oxide layer of interest. Among the thus-prepared oxide layer slurries, a slurry which had passed through a filter (pore size: 25 $\mu$m), was defoamed and applied onto a polyethylene terephthalate film, followed by drying, to thereby form an oxide layer of interest.
The thus-formed oxide layer was punched to rectangular pieces (length: 30 mm, width 10 mm), to thereby prepare test pieces. Each test piece was provided with matked lines with a gauge length of 10 mm. Young's modulus of the oxide layer test piece was measured in accordance with JIS K7161-1:2014.

(Formation of sheet for positive electrode)

Active material $LiNi_{1/3}Mn_{1/3}Co_{1/3}O_2$, the particles, vapor grown carbon fiber (VGCF) (as a conducting material), and an electrolytic solution were mixed so that the proportions (active material : particle : conducting material : electrolytic solution) were adjusted to 81.5:6.2:0.4:11.9 (wt%). To the mixture, a binder solution (4 wt%) was added, and the resultant mixture was agitated by means of a planetary agitator, to thereby prepare a slurry for forming a positive electrode. Among the thus-prepared positive electrode slurries, a slurry which had passed through a filter (pore size: 25 $\mu$m), was defoamed and applied onto an aluminum foil (a current-collector layer), followed by drying, to thereby form a positive electrode layer (thickness: about 20 $\mu$m).
The thus-prepared oxide layer slurry was applied onto the positive electrode layer on the side opposite to the current-collector layer and dried, to thereby yield a positive electrode sheet in which the oxide layer was stacked on the positive electrode layer.

(Formation of negative electrode layer)

A binder solution containing poly(vinylidene fluoride) dissolved in a carbonate ester was added to a mixture of an active material and conducting materials so that the proportions (active material Si ($D_{50}$=3.0 $\mu$m) : acetylene black (conducting material) : VGCF (conducting material) : poly(vinylidene fluoride) (binder) were adjusted to 92:4.2:0.8:3 (wt%). The resultant mixture was agitated by means of a planetary agitator, to thereby prepare a slurry for forming a negative electrode. Among the thus-prepared negative electrode slurries, a slurry which had passed through a filter (pore size: 25 $\mu$m), was defoamed and applied onto a stainless steel film, followed by drying, to thereby form a negative electrode layer (thickness: about 20 $\mu$m).

$Na_2CO_3$ and $SiO_2$ were weighed so as to achieve a composition of $Na_2O \cdot 3SiO_2$, and the resultant mixture was heated at 1,000°C or higher for melting. After cooling, the product was dissolved in water so as to adjust the $Na_2O \cdot 3SiO_2$ content to 5 mass%, to thereby yield a framework-forming agent. The active material layer was immersed in the framework-forming agent and then heated at 160°C, to thereby yield a negative electrode layer including an active material layer in which an inorganic framework was formed. The oxide layer slurry was applied onto the current-collector layer of the negative electrode layer and onto the opposite surface and then dried, whereby a variety of negative electrode sheets in which oxide layers were stacked on the negative electrode layer were yielded.

A SEM image of a cross-section of the oxide layer and that of a cross-section of the active material layer were taken, by which the circularity of the particles in the oxide layer, the circle-equivalent diameter of the particles of the oxide layer (as a median diameter), and the circle-equivalent diameter of the active material (as a median diameter) were determined. The circularity value was rounded-off to three decimal places. By dividing the median diameter of the particles by that of the active material, the median diameter ratio was obtained. The median diameter ratio was rounded-off to two decimal places.

(Fabrication of cells for evaluation)

The oxide layer of the positive electrode sheet and that of the negative electrode sheet were stacked together, and the stacked product is pressed through roll pressing. A terminal was connected to each of the current-collector layers, and the assembly was sealed in vacuum, to thereby provide evaluation cells of samples Nos. 1 to 6.

For comparison, an evaluation cell similar to that of No. 1, an evaluation cell of Comparative Example was provided, except that no inorganic framework was disposed in the negative electrode layer.

(Measurement of percent capacity maintenance)

Each of the evaluation cells of Nos. 1 to 6 and Comparative Example was repeatedly subjected to a charge/-discharge process at a rate of 0.1 C, and the ratio of the discharge capacity after 10 cycles with respect to the initial discharge capacity (i.e., percent capacity maintenance) was determined. Table 1 shows the binder content of the oxide layer, the circularity of the particles in the oxide layer, the Young's modulus of the oxide layer, the median diameter ratio, and the percent capacity maintenance. The binder content (vol%) shown in Table 1 is a ratio the volume of the binder with respect to the total volume of the particles forming the oxide layer, the binder, and the electrolytic solution (the same applied to Table 2).

[Table 1]

| No. | Oxide layer | | | Median diameter ratio (-) | % Capacity maintenance (%) |
| --- | --- | --- | --- | --- | --- |
| | Binder (vol%) | Circularity (-) | Young's modulus (MPa) | | |
| 1 | 9 | 0.662 | 0.07 | 0.60 | 95.8 |
| 2 | 15 | 0.662 | 0.44 | 0.60 | 94.7 |
| 3 | 20 | 0.662 | 3.12 | 0.60 | 93.5 |
| 4 | 25 | 0.662 | 4.65 | 0.60 | 93.1 |
| 5 | 30 | 0.662 | 6.17 | 0.60 | 92.2 |
| 6 | 50 | 0.662 | 12.3 | 0.60 | 62.4 |
| Comp. | 9 | 0.662 | 0.07 | 0.60 | 10.0 |

As shown in Table 1, the evaluation cells of Nos. 1 to 6 and Comparative Example were found to exhibit almost the same circularity and median diameter ratio of the particles forming the oxide layer. As compared with the evaluation cell of Comparative Example having no inorganic framework in the negative electrode layer, evaluation cells of Nos. 1 to 6 having an inorganic framework in the negative electrode layer were found to exhibit an enhanced percent capacity maintenance. That is, the cycle characteristics of the evaluation cells of Nos. 1 to 6 were found to be enhanced, as compared with Comparative Example.

According to the evaluation cells of Nos. 1 to 6, the percent capacity maintenance tended to decrease, as the binder content of the oxide layer increased. The evaluation cells of Nos.1 to 5, having a binder content less than 50 vol% were found to exhibit higher percent capacity maintenance, as compared with the evaluation cell of No. 6 having a binder content of 50 vol%.

According to the evaluation cells of Nos.1 to 6, the percent capacity maintenance tended to decrease, as the binder content and Young's modulus of the oxide layer increased. The evaluation cells of Nos.1 to 5, exhibiting a Young's modulus of the oxide layer of 0.07 to 6.17 MPa, were found to successfully exhibit higher percent capacity maintenance, as compared with the evaluation cell of No. 6 exhibiting a Young's modulus of 12.3 MPa.

(Experiment 2)

The evaluation cells of samples Nos.7 to 14 were fabricated in a manner similar to that employed in the evaluation cells of samples Nos.1 to 6, except that the circularity of the particles contained in the oxide layer and median diameter ratio of the particles forming the oxide layer were altered. Each of the evaluation cells of Nos. 7 to 14 was repeatedly subjected to a charge/discharge process at a rate of 0.1 C, and the ratio of the discharge capacity after 10 cycles with respect to the initial discharge capacity (i.e., percent capacity maintenance) was determined. Table 2 shows the binder content of the oxide layer, the circularity of the particles in the oxide layer, the Young's modulus of the oxide layer, the median diameter ratio, and the percent capacity maintenance.

[Table 2]

| No. | Oxide layer | | | Median diameter ratio (-) | % Capacity maintenance (%) |
|---|---|---|---|---|---|
| | Binder (vol%) | Circularity (-) | Young's modulus (MPa) | | |
| 7 | 9 | 0.656 | 0.07 | 0.16 | 88.2 |
| 8 | 9 | 0.659 | 0.07 | 1.00 | 53.2 |
| 9 | 9 | 0.661 | 0.07 | 0.05 | 86.3 |
| 10 | 9 | 0.662 | 0.07 | 0.03 | 27.5 |
| 11 | 9 | 0.714 | 0.07 | 0.57 | 89.0 |
| 12 | 9 | 0.742 | 0.07 | 0.58 | 4.4 |
| 13 | 9 | 0.836 | 0.07 | 0.57 | 1.5 |
| 14 | 4 | 0.662 | <0.05 | 0.60 | 2.6 |

According to the evaluation cells of samples Nos. 7 to 13, having the same binder content, the percent capacity maintenance tended to decrease, as the circularity of the particles increased. The evaluation cells of Nos. 7 to 11, having a circularity of the particles less than 0.72, were found to exhibit higher percent capacity maintenance, as compared with the evaluation cells of the samples Nos. 12 and 13, having a circularity of the particles of 0.742 or greater.

Among the evaluation cells of the samples Nos. 7 to 11, the evaluation cells of the samples Nos. 7, 9, and 11 were found to exhibit a percent capacity maintenance higher than that of the evaluation cells of the samples Nos. 8 and 10. The median diameter ratio of the samples Nos. 7, 9, and 11 was 0.04 or greater and 0.60 or less, while that of the samples Nos. 8 and 10 fell outside the range of 0.04 to 0.60. Consequently, when the median diameter of the particles is 0.04 times or greater and 0.60 times or less the median diameter of the active material, percent capacity maintenance can be maintained at high level.

The evaluation cell of No. 14, having a binder content of 4 vol%, was found to exhibit a Young's modulus of the oxide layer less than 0.05 MPa. The percent capacity maintenance of the evaluation cell of No. 14 was smaller than that of the evaluation cells of Nos. 7 to 13, and equivalent to that of the evaluation cells of Nos. 12 and 13. Consequently, the Young's modulus of the oxide layer is preferably 0.05 MPa or higher, more preferably 0.07 MPa or higher, for enhancing percent capacity maintenance.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above-described embodiments, in each of the sheet 10 and the power storage devices 20 and 30, the oxide layer 12 is disposed on the surface of the active material layer 11, and the current-collector layer 13 is disposed on the back surface of the active material layer 11; and in the power storage device 40, the oxide layer 12 is disposed on the active material layer 11, and the separator 33 is disposed on the back surface of the active material layer 11. However, the configuration is not necessarily limited thereto. It should be apparent for those skilled in the art that the oxide layer 12 is on the surface and the back surface of the active material layer 11 (e.g., inserting the oxide layer 12 between the active material layer 11 and the current-collector layer 13 of the sheet 10).

REFERENCE SIGNS LIST

10: sheet
11: active material layer
12: oxide layer
14: active material
15: inorganic framework
16: particle
20, 30, 40: power storage device
33: separator

**Claims**

1. A sheet having an active material layer containing an active material,

   which sheet further includes an oxide layer in contact with the active material layer, wherein
   the active material layer contains an inorganic framework which is disposed at least on a surface of the active material layer in contact with the oxide layer and in the active material, and
   the oxide layer contains particles of an oxide-based solid electrolyte, a binder for binding the particles, and an electrolytic solution.

2. The sheet according to claim 1, wherein
   the particles have a median diameter 0.04 times or greater and 0.6 times or less the median diameter of the active material.

3. The sheet according to claim 1 or 2, wherein
   the oxide layer has a Young's modulus of 0.05 to 6.50 MPa.

4. The sheet according to claim 1 or 2, wherein
   the particles have a circularity lower than 0.8

5. The sheet according to claim 1 or 2, wherein
   a ratio of the volume of the binder to the total volume of the particles, the binder, and the electrolytic solution is lower than 50%.

6. The sheet according to claim 1 or 2, wherein
   the particles have a garnet-type crystal structure including Li, La, and Zr.

7. The sheet according to claim 6, wherein
   the particles further contain Mg and Sr.

8. A power storage device having a positive electrode layer, a negative electrode layer, a separator for separating the positive electrode layer from the negative electrode layer, and

   the negative electrode layer includes a current-collector layer and an active material layer, wherein
   the active material layer is a part of a sheet as recited in claim 1 or 2.

9. The power storage device according to claim 8, wherein
   the separator includes the oxide layer belonging to the sheet.

10. The power storage device according to claim 8, wherein

the device further includes a protective layer in contact with the active material layer, and the protective layer includes the oxide layer belonging to the sheet.

FIG. 1

FIG. 2

FIG. 3

FIG. 4

## FIG. 5

## INTERNATIONAL SEARCH REPORT

| International application No. |
|---|
| **PCT/JP2024/034736** |

| | |
|---|---|
| **A.** | **CLASSIFICATION OF SUBJECT MATTER** |

*H01M 4/13*(2010.01)i; *H01B 1/06*(2006.01)i; *H01M 4/02*(2006.01)i; *H01M 4/62*(2006.01)i; *H01M 10/052*(2010.01)i; *H01M 10/0562*(2010.01)i
FI: H01M4/13; H01B1/06 A; H01M4/02 Z; H01M4/62 Z; H01M10/052; H01M10/0562

According to International Patent Classification (IPC) or to both national classification and IPC

| | |
|---|---|
| **B.** | **FIELDS SEARCHED** |

Minimum documentation searched (classification system followed by classification symbols)

H01M4/13; H01B1/06; H01M4/02; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2021-150152 A (DENSO CORP.) 27 September 2021 (2021-09-27)<br>    paragraphs [0021], [0023], [0030]-[0031], [0046]-[0047], [0059], [0063], [0087], [0089], [0096], fig. 7, table 3 | 1-10 |
| Y | JP 2020-024899 A (PANASONIC INTELLECTUAL PROPERTY MANAGEMENT CO., LTD.) 13 February 2020 (2020-02-13)<br>    paragraphs [0052], [0064] | 1-10 |
| Y | JP 2009-245925 A (NISSAN MOTOR CO., LTD.) 22 October 2009 (2009-10-22)<br>    paragraph [0022] | 1-10 |
| Y | WO 2021/153044 A1 (MURATA MANUFACTURING CO., LTD.) 05 August 2021 (2021-08-05)<br>    table 1 | 2 |
| Y | WO 2022/113782 A1 (FURUKAWA CO., LTD.) 02 June 2022 (2022-06-02)<br>    paragraph [0030], table 1 | 4 |

☑ Further documents are listed in the continuation of Box C.   ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **02 December 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| :--- |
| **PCT/JP2024/034736** |

**C.    DOCUMENTS CONSIDERED TO BE RELEVANT**

| Category* | Citation of document, with indication, where appropriate, of the relevant passages | Relevant to claim No. |
| :---: | :--- | :---: |
| Y | JP 2022-040736 A (NGK SPARK PLUG CO., LTD.) 11 March 2022 (2022-03-11) paragraph [0031] | 7 |
| A | JP 2019-212638 A (ATTACCATO LLC) 12 December 2019 (2019-12-12) paragraphs [0188]-[0193] | 1-10 |
| A | JP 2016-143477 A (SEIKO EPSON CORPORATION) 08 August 2016 (2016-08-08) paragraphs [0052]-[0054], [0111], [0119] | 1-10 |
| A | JP 2017-004674 A (SEIKO EPSON CORPORATION) 05 January 2017 (2017-01-05) paragraphs [0034]-[0035], [0060], [0065], [0156] | 1-10 |

Form PCT/ISA/210 (second sheet) (July 2022)

**INTERNATIONAL SEARCH REPORT**
**Information on patent family members**

International application No.

**PCT/JP2024/034736**

| Patent document cited in search report | | | Publication date (day/month/year) | Patent family member(s) | Publication date (day/month/year) |
|---|---|---|---|---|---|
| JP | 2021-150152 | A | 27 September 2021 | (Family: none) | |
| JP | 2020-024899 | A | 13 February 2020 | (Family: none) | |
| JP | 2009-245925 | A | 22 October 2009 | (Family: none) | |
| WO | 2021/153044 | A1 | 05 August 2021 | (Family: none) | |
| WO | 2022/113782 | A1 | 02 June 2022 | (Family: none) | |
| JP | 2022-040736 | A | 11 March 2022 | (Family: none) | |
| JP | 2019-212638 | A | 12 December 2019 | (Family: none) | |
| JP | 2016-143477 | A | 08 August 2016 | (Family: none) | |
| JP | 2017-004674 | A | 05 January 2017 | (Family: none) | |

Form PCT/ISA/210 (patent family annex) (July 2022)

**REFERENCES CITED IN THE DESCRIPTION**

**Patent documents cited in the description**

• JP 2014035987 A